## Europäisches Patentamt

(19) **European Patent Office**

**Office européen des brevets**

(11) Veröffentlichungsnummer: **0 030 354**
**B1**

(12) # EUROPÄISCHE PATENTSCHRIFT

(45) Veröffentlichungstag der Patentschrift:
**17.09.86**

(51) Int. Cl.⁴: **G 06 K  9/60**, G 06 K  9/36,
**G 06 F  15/20**

(21) Anmeldenummer: **80107531.8**

(22) Anmeldetag: **02.12.80**

(54) **Anordnung zum Speichern und Auswerten von mit einer nach einem Rasterverfahren arbeitenden Aufnahmeeinrichtung aufgenommenen Bildern.**

(30) Priorität: **10.12.79  DE 2949580**

(43) Veröffentlichungstag der Anmeldung:
**17.06.81 Patentblatt 81/24**

(45) Bekanntmachung des Hinweises auf die Patenterteilung:
**17.09.86 Patentblatt 86/38**

(84) Benannte Vertragsstaaten:
**AT BE CH DE FR GB LI NL**

(56) Entgegenhaltungen:
**DE - A - 2 322 939**
**DE - A - 2 439 102**
**FR - A - 1 548 366**
**US - A - 3 588 451**
**US - A - 3 639 903**

**MEDICAL AND BIOLOGICAL ENGINEERING, Band 12, Nr. 3, Mai 1974, Seiten 295-303, Stevenage, G.B., M.B. COYNE:** ″Quantitative image analyser using a colour-television display for medical applications″

(73) Patentinhaber: **Siemens Aktiengesellschaft Berlin und München, Wittelsbacherplatz 2, D-8000 München 2 (DE)**

(72) Erfinder: **Bräuer, Reinhard, Dipl.-Ing., Funkerstrasse 21, D-7500 Karlsruhe 41 (DE)**

# Beschreibung

Die Erfindung bezieht sich auf eine Anordnung zum Speichern von mit einer nach einem Rasterverfahren arbeitenden Aufnahmeeinrichtung aufgenommenen Bildern gemäss dem Oberbegriff des Anspruchs 1.

In der DE-OS 2 439 102 ist ein Verfahren zum Speichern von mit einer Fernsehkamera aufgenommenen und digitalisierten Bildern beschrieben, bei dem die Koordinate der Helligkeits- und Farbänderungen des Bildes und die in Richtung der Fernsehzeilen gemessene Länge bis zur nächsten Helligkeits- oder Farbänderung gespeichert werden. Mit einem solchen Verfahren kann im Vergleich zu den anderen bekannten Verfahren, bei denen die Helligkeitswerte aller Bildpunkte gespeichert werden, Speicherplatz eingespart werden, jedoch ist die selbsttätige Auswertung der aufgenommenen Bilder, z.B. zum Erkennen von besonderen Merkmalen oder Strukturen, nicht erleichtert.

Aus der US-PS 3 639 903 ist bekannt, zum Erkennen von Zeichen die Anzahl der Überschneidungen der Rasterlinien mit den mit einer Fernsehkamera aufgenommenen Linien festzustellen und mit gespeicherten Werten zu vergleichen.

Der vorliegenden Erfindung liegt die Aufgabe zugrunde, eine Anordnung zum Erkennen von bestimmten Strukturen in einem von einer Aufnahmeröhre rasterförmig abgetasteten und in ein elektrisches Signal umgesetzten Bild zu schaffen, die ein rasches Erkennen der Strukturen gestattet.

Erfindungsgemäss wird diese Aufgabe mit den im kennzeichnenden Teil des Anspruchs 1 angegebenen Massnahmen gelöst.

Die Abtasteinrichtung kann nach einem der bekannten Rasterverfahren arbeiten, wobei das Raster an die festzustellende Struktur angepasst werden kann. Bevorzugt wird man das in der Fernsehtechnik gebräuchliche Zeilenrasterverfahren verwenden, insbesondere dann, wenn die Strukturen rechteckförmig sind, wie z.B. Codes, deren Codeelemente aus in Reihen angeordneten dunklen oder hellen Rechtecken auf hellem oder dunklem Grund bestehen. Zweckmässig sind die Codeelementreihen in Richtung der Fernsehzeilen ausgerichtet.

Die neue Anordnung enthält zwei Zähler, den Signalsprungzähler und den Bildpunktzähler, deren Inhalte zwei Speichern, dem Signalsprung- und dem Bildpunktspeicher, zugeführt sind. Die beiden Speicher können gesonderte Speicher sein, sie können auch verschiedene Bereiche eines einzigen Speichers, z.B. des Arbeitsspeichers eines Mikroprozessors, sein. Die Grösse des Signalsprungspeichers hängt in erster Linie ab von der Anzahl der Rasterabschnitte, in die das aufgenommene Bild unterteilt ist, da seine Zellen je einem Rasterabschnitt oder einer Gruppe von Rasterabschnitten zugeordnet sind. Arbeitet die Abtasteinrichtung nach dem üblichen Zeilenrasterverfahren, dann kann ein Rasterabschnitt eine Fernsehzeile sein. Im Falle von 256 Zeilen sind dann 256 Zellen für den Signalsprungspeicher vorzusehen. Es kann auch zweckmässig sein, kleinere Rasterabschnitte von z.B. einer halben oder einer viertel Fernsehzeile und damit eine entsprechend vervielfachte Zahl von Signalsprungspeicherzellen zu wählen, wenn die Kapazität der Bildpunktspeicherzellen für die gewünschte Auflösung in Abtastrichtung nicht ausreicht. Haben diese Speicherzellen z.B. eine Kapazität von 8 Bit und ist ein Rasterabschnitt gleich einer Fernsehzeile, dann beträgt der kleinste erkennbare Abstand in Zeilenrichtung 1/256 Fernsehzeile. Sind aber die Rasterabschnitte nur ein Viertel lang, dann ist der kleinste erkennbare Abstand kleiner als 1/1000 einer Fernsehzeile. Während die Adresse des Signalsprungspeichers nach dem Abtasten jeweils eines Rasterabschnittes verändert, zweckmässig um Eins erhöht wird, werden die neuen Adressen für den Bildpunktzähler nach jedem Eintrag gebildet, wobei ein Eintrag nur dann erfolgt, wenn ein Signalsprung aufgetreten ist. Der Ort einer Helligkeitsänderung im Bild ist daher durch die Nummer des Rasterabschnittes, in dem die Helligkeitsänderung liegt, das ist die Adresse des Signalsprungspeichers, und durch die im Bildpunktspeicher enthaltene Nummer des Bildpunktes, an dem innerhalb des Rasterabschnittes die Helligkeitsänderung auftritt, bestimmt. Die Adresse der Bildpunktspeicherzelle, in der diese Bildpunktnummer enthalten ist, errechnet sich aus der Summe der Inhalte der Signalsprungspeicherzellen, die den bezüglich der Abtastung davorliegenden Rasterabschnitten zugeordnet sind, zuzüglich der Zahl der im Rasterabschnitt der betrachteten Helligkeitsänderung vor dieser liegenden Helligkeitsänderungen.

Eine solche Speicherung von Bildern hat nicht nur den Vorteil, dass wenig Speicherplatz benötigt wird, sondern auch, dass die Auswertung eines so gespeicherten Bildes einfach und schnell möglich ist. Die zu erkennenden Strukturen sind, vor allem, wenn sie wählbar sind, wie z.B. Beschriftungen, Codes und dergleichen, derart, dass sie in Zeilenrichtung eine bestimmte Anzahl, z.B. eine Mindestzahl von Helligkeitsänderungen je Rasterabschnitt, ergeben. Die Inhalte der Zellen des Signalsprungspeichers, die eine kleinere Zahl als die Mindestzahl enthalten, weisen darauf hin, dass der zugehörige Rasterabschnitt nicht die festzustellende Struktur überdeckt; die Inhalte dieser Zellen brauchen daher nicht ausgewertet zu werden. Es genügt daher, die Signalsprungspeicherzellen nacheinander auszulesen und zu überprüfen, ob die ausgelesenen Werte innerhalb eines aufgrund der festzustellenden Struktur vorgegebenen Wertebereichs liegen. Nur dann, wenn dies der Fall ist, findet eine Auswertung des Inhalts des Bildpunktspeichers statt. Durch Aufsummieren der aus dem Signalsprungspeicher ausgelesenen Werte wird die Anfangsadresse des Bildpunktspeicherbereichs ermittelt, unter der die interessierenden Bildpunktnummern gefunden werden.

In der bisher beschriebenen Ausführung wird der Stand des Bildpunktzählers sowohl bei einer Änderung der Helligkeit von dunkel nach hell als auch von hell nach dunkel, also bei Signalsprüngen beider Polarität in den Bildpunktspeicher übernommen, so dass die Bildpunktnummer jeder Helligkeitsänderung gespeichert ist. Vorteilhaft ist zusätzlich zum Bildpunktzähler ein Längenzähler vorgesehen, der bei Signalsprüngen der einen Polarität, z.B. bei einer Helligkeitsänderung von hell nach dunkel, gestartet und bei Signalsprüngen der anderen Polarität, z.B. bei Helligkeitsänderungen von dunkel nach hell, gestoppt wird und dessen Stand dann in einen Längenspeicher übernommen wird. Der Bildpunktzählerstand braucht dann nur bei Signalsprüngen einer Polarität in den Bildpunktspeicher übertragen werden, zweckmässig bei Signalsprüngen der Polarität, bei denen der Längenzähler gestartet wird. Der Längenzähler kann die Taktimpulse erhalten, die auch dem Bildpunktzähler zugeführt sind. Der Längenspeicher wird in derselben Weise wie der Bildpunktspeicher adressiert. Bildpunkt- und Längenspeicher können auch zwei Bereiche eines einzigen Speichers sein, z.B. können Speicherzellen mit geradzahliger Adresse den Bildpunktspeicher und Zellen mit ungeradzahliger Adresse den Längenspeicher bilden.

Eine Ausführungsart der erfindungsgemässen Anordnung, die das Abspeichern von Störimpulsen vermeidet, ist im Patentanspruch 9 angegeben.

Anhand der Zeichnung werden im folgenden die Erfindung sowie weitere Ausgestaltungen und Vorteile näher beschrieben und erläutert.

Figur 1 zeigt ein Prinzipschaltbild eines Ausführungsbeispiels der Erfindung.

Die Figuren 2 und 3 veranschaulichen die Funktion der Anordnung nach Figur 1 und

Figur 4 verdeutlicht die Auswertung von mit der neuen Anordnung gespeicherten Bildsignalen.

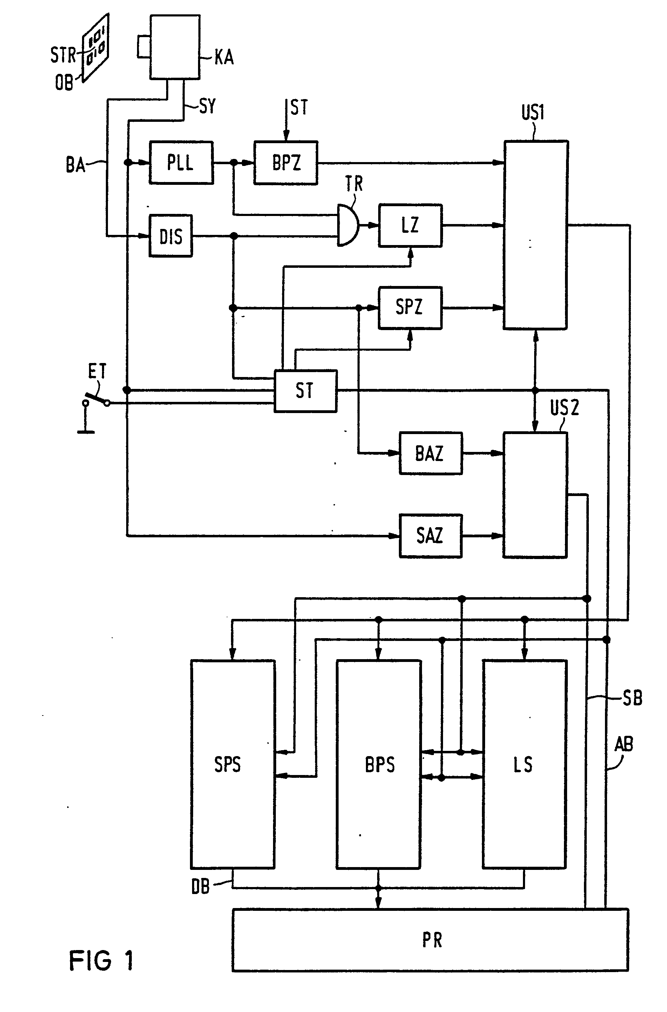

In Figur 1 ist mit KA eine Fernsehkamera bezeichnet, die ein Objekt OB, auf dem Strukturen STR angebracht sind, in Synchron- und Bildaustastsignale umsetzt. Erstere werden über eine Leitung SY einem Frequenzvervielfacher PLL zugeführt, welcher die zeilenfrequenten Impulse in Impulse mit zur Zeilenfrequenz hoher Frequenz, z.B. 16 MHz, umsetzt. Die Bildaustastsignale gelangen über eine Leitung BA auf einen Diskriminator DIS, der im einfachsten Falle eine Schwellwertstufe ist, er kann aber auch ein Fensterdiskriminator oder ein Analog-Digital-Umsetzer sein. An ihn ist ein Signalsprungzähler SPZ angeschlossen, der die Anzahl der Sprünge des Ausgangssignals des Diskriminators DIS aufsummiert, und zwar nur die Signalsprünge der einen Polarität, die z.B. entstehen, wenn der Abtaststrahl der Kamera KA auf das Bild eines Elements der Struktur STR trifft. Der Signalsprungzähler SPZ wird von einer Steuereinheit ST gesteuert, derart, dass sein Stand nach Abtasten jeweils eines Rasterabschnittes, z.B. einer Fernsehzeile oder eines Teils einer Fernsehzeile, über einen ebenfalls von der Steuereinheit ST gesteuerten Umschalter US1 dem Dateneingang eines Signalsprungspeichers SPS zugeführt und dann gelöscht wird.

Die Adresse für den Signalsprungspeicher SPS wird in einem Signalsprungspeicher-Adressenzähler SAZ gebildet, der die Synchronimpulse oder davon abgeleitete Impulse während der Abtastung eines Bildes aufsummiert. Der Stand dieses Zählers SAZ gelangt über einen wiederum von der Einheit ST gesteuerten Umschalter US2 auf den Adresseneingang des Signalsprungspeichers SPS. Auf diese Weise ist das von der Kamera KA aufgenommene Bild in Rasterabschnitte (Fernsehzeile oder Teil einer Fernsehzeile) unterteilt, und jedem Rasterabschnitt ist eine Zelle des Signalsprungspeichers SPS zugeordnet. Die Kapazität dieser Zellen richtet sich nach der Anzahl der in einem Rasterabschnitt zu erwartenden Signalsprünge. Es ist möglich, unter einer Adresse des Signalsprungspeichers SPS die Summen der Signalsprünge von mehreren Rasterabschnitten zu speichern.

An den Frequenzvervielfacher PLL ist ein Bildpunktzähler BPZ angeschlossen, der mit Beginn der Abtastung jedes Rasterabschnittes die Ausgangsimpulse des Vervielfachers PLL aufzusummieren beginnt. Sein jeweiliger Stand gibt daher an, an welcher Stelle innerhalb des vom Signalsprungspeicher-Adressenzähler SPZ angegebenen Rasterabschnittes der Abtaststrahl der Kamera KA auftrifft. Erreicht der Abtaststrahl eine Helligkeitsänderung des Bildes, d.h. tritt am Ausgang des Diskriminators DIS ein Signalsprung auf, schaltet die Steuereinheit ST den Stand des Bildpunktzählers BPZ über den Umschalter US1 auf den Dateneingang eines Bildpunktspeichers BPS. Die Adresse für den Bildpunktspeicher BPS wird in einem Bildpunktspeicher-Adressenzähler BAZ gebildet, der die Signalsprünge der einen Polarität während der Abtastung eines Bildes aufsummiert. Über einen von der Steuereinheit ST gesteuerten Umschalter US2 gelangt diese Adresse auf den Adresseneingang des Bildpunktspeichers BPS. Diese Adresse wird daher mit jedem Signalsprung erhöht, und zwar nur bei Signalsprüngen der einen Polarität, im Ausführungsbeispiel der positiven Polarität, die z.B. einem Übergang von dunkel nach hell entsprechen. Im Bildpunktspeicher BPS stehen daher die auf die Rasterabschnitte bezogenen Nummern der Bildpunkte, an denen Signalsprünge der einen Polarität aufgetreten sind.

Mit einem Signalsprung der einen Polarität ändert sich das Ausgangssignal des Diskriminators DIS in den Zustand, in dem eine Torschaltung TR für die Impulse des Frequenzvervielfachers PLL freigegeben wird. Ein Längenzähler LZ summiert diese Impulse auf, bis das Diskriminatorsignal sich wieder ändert, also ein Signalsprung der anderen z.B. negativen Polarität auftritt. Die Steuereinheit ST stellt dies fest, gibt den Stand des Längenzählers LZ über den Umschalter US1 auf den Dateneingang eines Längenspeichers LS und setzt den Längenzähler LZ wieder zurück. Die Adressen für den Längenspeicher LS sind im Ausführungsbeispiel dieselben wie die für den Bildpunktspeicher BPS. Dies ist dann möglich, wenn gesonderte Speicher verwendet werden. Werden aber die Bildpunktnummern und die -längen in verschiedenen Bereichen eines einzigen Speichers eingetragen, dann muss dem Stand des Adressenzählers BAZ eine Grundadresse hinzugefügt werden. Während die Anzahl der Zellen des Signalsprungspeichers SPS durch die Anzahl der Rasterabschnitte gegeben ist, muss für den Bildpunkt und den Längenspeicher eine solche Zahl von Zellen bereitgestellt werden, wie Signalsprünge einer Polarität erwartet werden.

Die Ausgänge der Speicher SPS, BPS und LS sind über einen Datenbus, die Adress- und Steuereingänge über einen Adressbus AB und einen Steuerbus SB mit einem Prozessor PR verbunden. Nach dem Abtasten und Einspeichern der Signale eines Bildes kann der Prozessor PR die gespeicherten Daten abrufen, als Bild mittels eines von ihm gesteuerten Wiedergabegerätes darstellen oder in sonstiger Weise auswerten. Die Auswertung erfolgt in der Weise, dass zunächst der Signalsprungspeicher SPS ausgelesen wird, und zwar in der Reihenfolge, in welcher die Werte eingeschrieben wurden. Nur dann, wenn in diesen ein Wert eingetragen ist, werden die zugehörigen Werte aus dem Bildpunkt- und dem Längenspeicher abgerufen und ausgewertet. Diese zugehörigen Werte werden dadurch gefunden, dass die aus dem Signalsprungspeicher SPS ausgelesenen Werte aufsummiert werden und der Summenwert als Adresse auf die beiden Speicher BPS, LS gegeben wird. Im folgenden wird das Einspeichern und Auswerten anhand eines Beispiels näher erläutert.

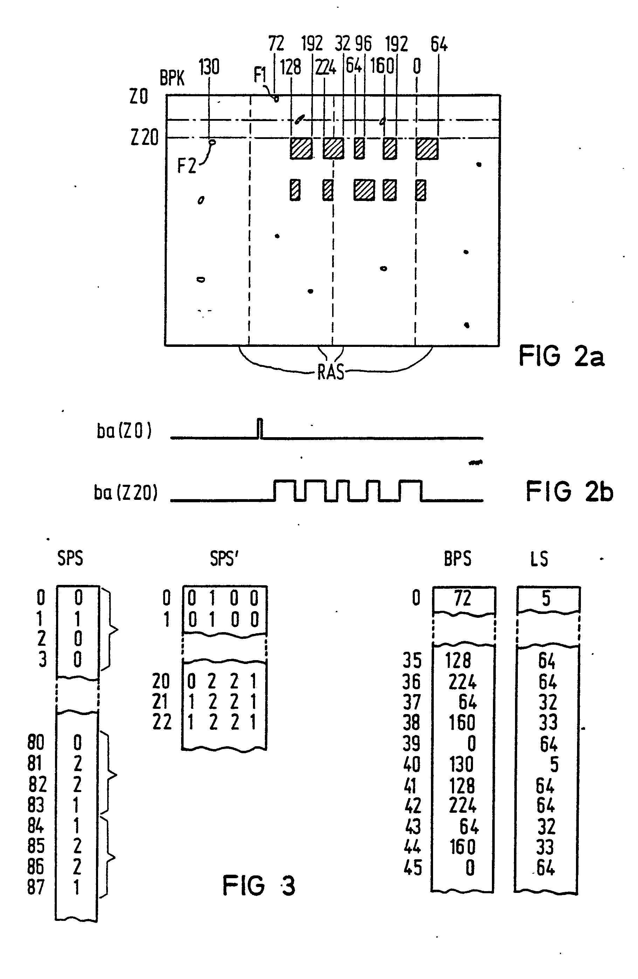

Figur 2 zeigt den Ausschnitt aus dem von der Kamera KA aufgenommenen Bild, der gespeichert und ausgewertet werden soll. Dieser Ausschnitt wird zeilenweise, beginnend mit einer Zeile ZO, abgetastet. Die Zeilen sind in jeweils vier Rasterabschnitte RAS unterteilt. Mit Beginn der Abtastung der Rasterabschnitte wird der Bildpunktzähler und der Signalsprungzähler auf Null gesetzt. Der Bildpunktzähler habe eine Kapazität von 8 Bit, so dass er während der Abtastung der Rasterabschnitte von 0 auf 255 hochgezählt wird. Beim Abtasten des ersten Rasterabschnittes der Zeile ZO tritt keine Änderung des Kamerasignals auf, welche eine Änderung des Diskriminatorausgangssignals ba (ZO) (Figur 2b) bewirkt. Der Signalsprungzähler erhält daher keinen Impuls, so dass mit dem Ende der Abtastung des ersten Rasterabschnittes in die Zelle Null des Signalsprungspeichers SSP der Wert Null eingetragen wird (Figur 3).

Im zweiten Rasterabschnitt wird ein Fleck F1 abgetastet, der eine Signaländerung des Diskriminatorsignals ba (ZO) bewirkt, und zwar in dem Zeitpunkt, zu dem der Bildpunktzähler den Stand 72 hat. Es wird daher in die Zelle 0 des Bildpunktspeichers BPS der Wert 72 eingetragen. Gleichzeitig wird der Längenzähler freigegeben. Der den Fleck F1 überdeckende Abschnitt der Zeile ZO habe eine Länge von fünf Bildpunkten. Das Diskriminatorsignal springt daher beim Stand 5 des Längenzählers wieder zurück, und es wird in den Längenspeicher LS der Wert 5 übernommen. Verlässt der Abtaststrahl den zweiten Rasterabschnitt, wird die im Signalsprungzähler enthaltene Eins in die Zelle 1 des Signalsprungspeichers übertragen. Beim Abtasten des dritten und vierten Rasterabschnittes der Zeile ZO findet keine Änderung des Signals ba (ZO) statt, so dass in die Zellen 2 und 3 des Signalsprungspeichers SPS jeweils eine Null eingeschrieben wird und in den Bildpunktspeicher BPS und den Längenspeicher LS kein Eintrag stattfindet.

Nach Abtasten der Zeile ZO werden entsprechend die weiteren Zeilen abgetastet, wobei Störflecken Diskriminatorsignale und damit Eintragungen in den Bildpunkt- und den Längenspeicher auslösen können.

In der Zeile Z20 werden zum erstenmal fünf Codeelemente abgetastet, welche eine festzustellende Struktur bilden. Diese Codeelemente sind im Ausführungsbeispiel in Zeilenrichtung nebeneinander angeordnet, wobei die Abstände ihrer Vorderkanten gleich sind. Sie unterscheiden sich durch ihre Länge in Zeilenrichtung. In Figur 2a ist angenommen, dass die Codeelementreihe exakt in Zeilenrichtung verläuft; die erfindungsgemässe Anordnung arbeitet aber auch dann einwandfrei, wenn Zeilenrichtung und Codeelementreihe einen kleinen Winkel bilden. Voraussetzung ist lediglich, dass zumindest eine Abtastzeile die Vorderkante des ersten Codeelementes und die Rückkante des letzten Elementes schneidet. Eine grössere Sicherheit wird allerdings dann erzielt, wenn mehrere untereinanderliegende Zeilen diese Voraussetzung erfüllen.

Vor dem Abtasten der Zeile Z20 habe der Diskriminator 35 Signale abgegeben, die zu Eintragungen in den Bildpunkt- und den Längenspeicher führten. Beim Abtasten des ersten Rasterabschnittes der Zeile Z20, das ist insgesamt der achtzigste Rasterabschnitt, tritt keine Änderung des Signals ba (Z20) auf, so dass in die Zelle 80 des Signalsprungspeichers SPS eine Null eingetragen wird. Im zweiten Rasterabschnitt trifft dagegen die Abtastung das erste Codeelement der oberen Reihe beim Bildpunkt 128, und es wird in die Zelle 35 des Bildpunktspeichers der Wert 128 eingetragen. Beim Bildpunkt 192 wird die Rückseite des ersten Codeelementes erreicht, und der Längenzählerstand 64 wird in die Zelle 35 des Längenspeichers LS übernommen. Beim Bildpunkt 224 wird das nächste Codeelement getroffen und damit die Ziffer 224 in die Zelle 36 des Bildpunktspeichers BPS eingetragen. Beim Bildpunkt 255 endet der zweite Rasterabschnitt, und vom Signalsprungzähler wird der Wert 2 in die Zelle 81 des Signalsprungspeichers SSP übernommen. Unabhängig davon, dass die Abtastung vom zweiten in den dritten Rasterabschnitt übergeht, summiert der Längenzähler die Taktimpulse auf, bis beim Bildpunkt 32 des dritten Rasterabschnittes das zweite Codeelement zu Ende ist. Es wird dann die Ziffer 64 vom Längenzähler in die Zelle 36 des Längenspeichers LS eingeschrieben. Die folgenden drei Codeelemente werden in entsprechender Weise in Digitalwerte umgesetzt und abgespeichert. Beim Abtasten der folgenden Zeilen werden jedesmal die Codeelemente erfasst, so dass in etwa übereinstimmende Werte gespeichert werden. Zwischen den Werten der Codeelemente können auch solche für Störflecken, wie z.B. den Störfleck F2, liegen, der z.B. einen Eintrag in die Zellen 40 des Bildpunkt- und des Längenspeichers bewirkt.

Mit SPS' ist ein Signalsprungspeicher bezeichnet, der im Vergleich zum Speicher SPS anders organisiert ist, indem jeweils nur einer Zelle eine Fernsehzeile zugeordnet ist. Jede der vier Stellen der Zellen ist einem Rasterabschnitt zugeordnet.

Zur Wiedergabe des in den Speichern enthaltenen Fernsehbildes wird zu Beginn der Darstellung eines jeden Rasterabschnittes der Inhalt der zu diesem Rasterabschnitt gehörenden Signalsprungspeicherzelle ausgelesen. Ist der Inhalt Null, wird in diesem Rasterabschnitt kein Bildpunkt hellgetastet. Ist, wie z.B. bei der Zelle 1, der Inhalt Eins, werden die Inhalte der ersten Bildpunkt- und Längenspeicherzellen, im Ausführungsbeispiel die Zellen 0, ausgelesen, und es werden der durch den Inhalt der Bildpunktspeicherzelle gegebene Bildpunkt sowie eine durch den Inhalt der Längenspeicherzelle gegebene Anzahl von folgenden Bildpunkten hellgetastet. Hierzu kann der Inhalt der Bildpunktspeicherzellen mit dem Stand des Bildpunktzählers verglichen und bei Gleichheit ein Helltastsignal erzeugt werden, das so lange aufrechterhalten wird, bis der Längenzählerstand gleich dem Inhalt der zuvor ausgelesenen Längenspeicherzelle ist. Danach wird der Stand des Adressenzählers für den Bildpunkt- und den Längenspeicher um Eins erhöht. Ist der Inhalt einer Signalsprungspeicherzelle 2, 3 oder grösser, so werden Bildpunkt- und Längenspeicher während der Darstellung eines Rasterabschnittes zwei-, dreimal oder öfter ausgelesen.

Zum Auswerten des gespeicherten Bildes brauchen nicht alle gespeicherten Werte den Speichern entnommen werden. Die festzustellenden Strukturen, wie der in Figur 2a gezeigte Code, haben nämlich eine bestimmte Anzahl von Hell-/ Dunkelübergängen, so dass, wenn eine Zeile den Code überdeckt, eine Mindestzahl von Signalsprüngen in den zugehörigen Zellen des Signalsprungspeichers gespeichert sein muss. Es genügt daher zunächst zu prüfen, ob die Summe der Inhalte der Zellen, die einem Rasterabschnitt oder einer Gruppe von Rasterabschnitten, z.B. den vier eine Zeile bildenden Abschnitten, zugeordnet sind, in einem bestimmten Wertebereich liegen, z.B. zwischen 4 und 6 oder grösser als 4. Im Beispiel ist die Summe der Inhalte der Zellen 0 bis 3 des Signalsprungspeichers SPS Eins, was bedeutet, dass in der Zeile ZO kein Code liegen kann. Dagegen ist die Summe der Inhalte der zur Zeile Z20 gehörenden Zellen 80 bis 83 fünf. Dies ist ein Hinweis, dass in dieser Zeile ein Code vorhanden sein kann. Der Inhalt des Signalsprungspeichers SPS wird in der Reihenfolge des Eintragens ausgelesen und dabei die jeweils ausgelesenen Werte addiert. Bis zum Auslesen der Zelle 80 des Signalsprungspeichers sei diese Summe 35, so dass, wenn die zu den Zellen 80 bis 83 zugehörigen Inhalte des Bildpunkt- und des Längenspeichers gefunden werden sollen, deren Zellen 35 bis 39 aufgerufen werden. Bildet man die Differenz der Inhalte dieser Bildpunktspeicherzellen, so stellt man fest, dass die Differenz konstant, nämlich 96, ist, wenn man beachtet, dass bei einer dualen Darstellung der Zahlen mit 8 Bit die Ziffer 0 gleich 256 und die Ziffer 64 gleich 320 ist. Diese gleichen Abstände sind ein weiterer Hinweis darauf, dass es sich bei den Signalsprüngen um die festzustellende Struktur handelt. Bildet man ferner das Verhältnis der aus dem Längenspeicher ausgelesenen Werte, so stellt man fest, dass nur die Verhältnisse 1:1, 1:2 und 2:1 auftreten, was ein weiterer Hinweis auf das Vorliegen der gesuchten Struktur ist, da vereinbarungsgemäss nur zweierlei Codeelemente verwendet sein sollen, wobei die breiteren Elemente doppelt so breit wie die schmaleren sind. Selbstverständlich können auch andere Codeelemente verwendet werden, deren Breiten in einem anderen Verhältnis zueinander stehen.

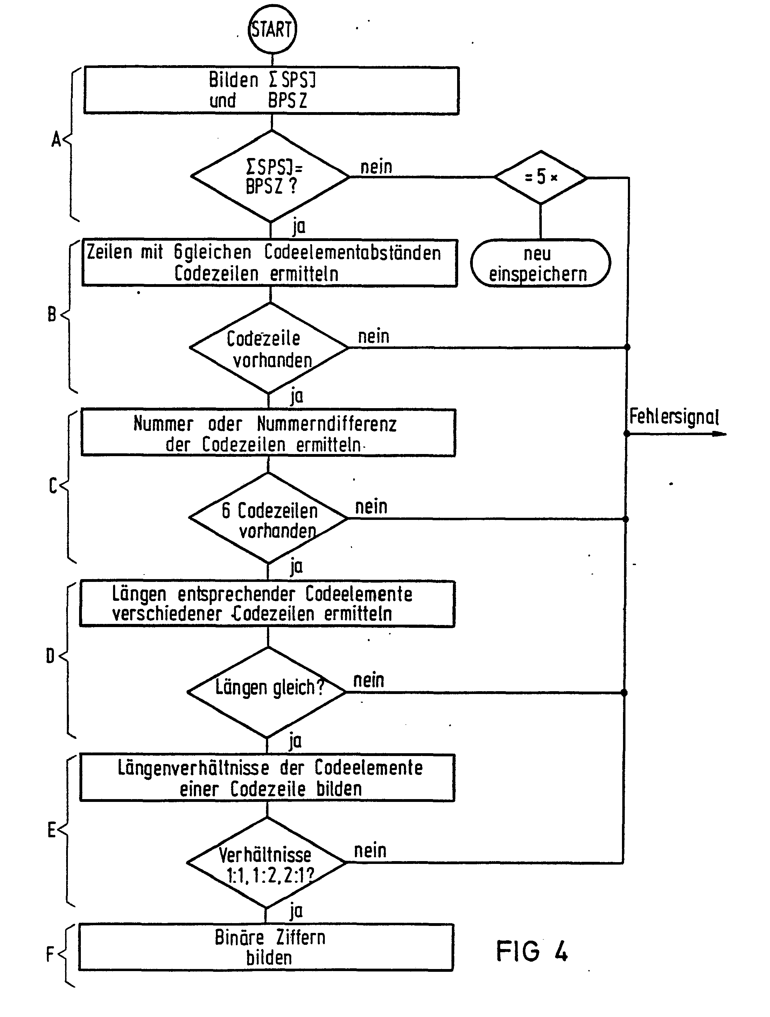

Anhand der Figur 4 wird das Auswerten der im Signalsprungspeicher und im Bildpunkt- sowie dem Längenspeicher enthaltenen Werte näher beschrieben.

Ist ein Bild aufgenommen und sind die Ausgangssignale der Abtasteinrichtung eingespeichert, erhält die Auswerteeinrichtung PR ein Startsignal, worauf sie in einem ersten Auswerteschritt A den Signalsprungspeicher SPS ausliest und die Summe Σ SPSI bildet. Ferner wird der Bildpunktspeicher ausgelesen und ein Wert BPSZ gebildet, der angibt, in wieviel Zellen ein Wert eingeschrieben ist. Es wird dann verglichen, ob die beiden Werte Σ SPSI und BPSZ übereinstimmen. Nur dann, wenn dies der Fall ist, findet eine weitere Auswertung statt. Sind die beiden Grössen nicht gleich, wird erneut das Bild aufgenommen und abgespeichert. Danach werden wieder die beiden Werte Σ SPSI und BPSZ gebildet und miteinander verglichen. Wird mehrmals, z.B. fünfmal, eingespeichert und verglichen, ohne dass eine Übereinstimmung festgestellt ist, wird ein Fehlersignal abgegeben.

Wie schon erwähnt, soll der gemäss Figur 2a gewählte Code derart beschaffen sein, dass jeder Code aus einer bestimmten Anzahl von Codeelementen besteht, deren Vorderkanten gleiche Abstände haben. Es werden daher im nächsten Schritt B die Summe der Inhalte derjenigen Zellen des Signalsprungspeichers aufgerufen, die jeweils einer Fernsehzeile zugeordnet sind. Ist die Summe der dabei ausgelesenen Werte grösser oder gleich der Anzahl der Codeelemente je Reihe, wird auf die zugehörigen Bildpunktspeicherzellen zugegriffen und die Differenz der dort gespeicherten Bildpunktnummern gebildet. Diese Differenzen werden verglichen und nur dann, wenn, entsprechend den fünf Codeelementen je Reihe, vier aufeinanderfolgende Differenzen gleich sind, zum nächsten Auswerteschritt C übergegangen. Selbstverständlich muss bei einer anderen Anzahl von Codeelementen eine entsprechend andere Anzahl von übereinstimmenden Differenzen aufeinanderfolgen.

Im Schritt C werden über die Adressen der Signalsprungspeicherzellen die Fernsehzeilen bzw. die Differenzen der Zeilen errechnet, für die vier gleiche Codeelementabstände ermittelt wurden. Es wird dann geprüft, ob eine Mindestzahl, z.B. sechs solcher Zeilen, in denen vier gleiche Abstände ermittelt wurden, benachbart ist. Dabei kann unter «benachbart» verstanden sein, dass diese Zeilen höchstens zwei, drei oder vier Zeilen auseinander liegen dürfen. Zusätzlich kann aber gefordert werden, dass eine Mindestzahl, z.B. drei Zeilen, unmittelbar nebeneinander liegen. Sind diese Bedingungen erfüllt, werden im folgenden Auswerteschritt D die Längen der Codeelemente miteinander verglichen, und zwar die jeweils ersten, dann die jeweils zweiten usw. von benachbarten Fernsehzeilen, in denen vier gleiche Codeelementabstände festgestellt sind. Auch hier muss eine Mindestzahl übereinstimmen. Anschliessend wird im Schritt E das Verhältnis der Längen der Codeelemente der einzelnen Zeilen gebildet werden. Da die Längenverhältnisse der Codeelemente bekannt sind, dürfen nur bestimmte Verhältnisse der Ergebnisse des Längenspeichers, auftreten, z.B. 1:1, 1:2 und 2:1. Schliesslich erfolgt im Bearbeitungsschritt F die Umsetzung der Längen in binäre Daten, indem z.B. ein Wert gebildet wird, der zwischen der Länge der kürzeren Codeelemente und der der längeren liegt, etwa durch Halbieren der grössten Länge, Verdoppeln der kleinsten Länge oder durch Mittelwertbildung. Der so gebildete Wert wird mit den Längen der festgestellten Codeelemente verglichen, wobei z.B. den grösseren Längen «log. 1» und den kleineren «log. 0» zugeordnet wird.

**Patentansprüche**

1. Anordnung zum Speichern und Auswerten von Bildern (OB) mit einer Aufnahmeeinrichtung (KA), welche das Bild in einem Raster abtastet und in elektrische Signale (BA) umsetzt, mit einem Bildpunktzähler (BPZ), dem Impulse konstanter Taktfrequenz zugeführt sind und dessen Stand bei Auftreten eines Signalsprungs in einen Bildpunktspeicher (BPS) übernommen wird und mit einer Auswerteeinrichtung zur Auswertung der gespeicherten Signale, gekennzeichnet durch folgende Merkmale:

a) Es ist ein Signalsprungzähler (SPZ) vorhanden, der während der Abtastung von Rasterabschnitten (RAS) die Anzahl der Signalsprünge aufsummiert und dessen Stand nach jeder Abtastung eines Rasterabschnittes in eine diesem Rasterabschnitt zugeordnete Zelle eines Signalsprungspeichers (SPS) eingetragen wird.

b) Die Auswerteeinrichtung erhält die im Signalsprungspeicher (SPS) enthaltenen Werte in der Reihenfolge des Einspeicherns, summiert die empfangenen Werte und gibt, wenn der empfangene Wert in einem hinsichtlich bekannter Merkmale der festzustellenden Struktur des abgetasteten Bildes vorgegebenen Wertebereich liegt, die durch Aufsummieren der empfangenen Werte gebildete Zahl auf den Adresseneingang des Bildpunktspeichers (BSP) und wertet die Inhalte der so aufgerufenen Bildpunktspeicherzellen aus.

2. Anordnung nach Anspruch 1, dadurch gekennzeichnet, dass die Aufnahmeeinrichtung eine Fernsehkamera (KA) ist.

3. Anordnung nach Anspruch 2, dadurch gekennzeichnet, dass die Rasterabschnitte die Fernsehzeilen sind.

4. Anordnung nach Anspruch 2, dadurch gekennzeichnet, dass die Rasterabschnitte Teile (RAS) einer Fernsehzeile sind.

5. Anordnung nach Anspruch 1 bis 4, dadurch gekennzeichnet, dass der Stand des Bildpunktzählers (BPZ) bei jedem Signalsprung der einen oder der anderen Polarität in den Bildpunktspeicher (BPS) übernommen wird, dass ein Längenzähler (LZ) vorhanden ist, der mit jedem Signalsprung der einen Polarität für die Taktimpulse freigegeben wird und dessen Stand bei jedem Signalsprung der anderen Polarität in einen Längenspeicher (LS) übernommen wird.

6. Anordnung nach Anspruch 5, dadurch gekennzeichnet, dass zum Feststellen von Codes mit in Rasterrichtung angeordneten Codeelementen das Verhältnis und/oder die Differenz von im Längenspeicher (LS) enthaltenen Werten und die Differenz der im Bildpunktspeicher (BPS) enthaltenen Werten zur weiteren Auswertung gebildet werden.

7. Anordnung nach Anspruch 6, dadurch gekennzeichnet, dass bei Verwendung eines Codes mit Codeelementen, deren Vorder- bzw. Hinterkanten gleiche Abstände haben, die Auswerteeinrichtung zunächst die Differenz der im Bildpunktspeicher (BPS) enthaltenen Werte bildet und nur dann die in den zugehörigen Zellen des Längenspeichers (LS) enthaltenen Werte auswertet, wenn die Differenzen gleich sind.

8. Anordnung nach Anspruch 6 oder 7, dadurch gekennzeichnet, dass ein aus den Inhalten des Längenspeichers (LS) und des Bildpunktzählers (BPS) gebildetes Codesignal nur dann abgegeben wird, wenn in mehreren einander benachbarten Rasterlinien übereinstimmende Signale festgestellt werden.

9. Anordnung nach einem der Ansprüche 1 bis 8, dadurch gekennzeichnet, dass dem Bildpunktzähler ein Zwischenspeicher nachgeschaltet ist, in den nach Auftreten eines Signalsprungs der Stand des Bildpunktzählers übernommen wird, dass ein Zeitgeber vorhanden ist, der auf eine Zeit eingestellt ist, die grösser als die Dauer von Störimpulsen, aber kleiner als die Dauer von Nutzimpulsen ist und der nur dann die Ausgabe des Inhalts des Bildpunkt-Zwischenspeichers an den Bildpunktspeicher sowie die Aufsummierung von Taktimpulsen im Längenzähler freigibt, wenn die in ihm eingestellte Zeit abgelaufen ist, ohne dass ein neuer Signalsprung auftrat.

**Claims**

1. An arrangement for storing and analysing images (OB), with a recording device (KA) which scans the image in a raster and converts it into electrical signals (BA), with an image point counter (BPZ) which is supplied with pulses of a constant clock frequency and whose count is transferred into an image point store (BPS) when a signal jump occurs, and with an analysis device which serves to analyse the stored signals, characterised by the following features:

a) a signal jump counter (SPZ) is provided which, during the scanning of raster sections (RAS), adds the number of signal jumps and whose count, following each scanning of a raster section, is entered into a cell, assigned to this raster section, of a signal jump store (SPS).

b) the analysis device receives the values contained in the signal jump store (SPS) in the sequence in which they have been input, adds the received values, and when the received value occurs within a value range which has been predetermined on the basis of known features of the structure to be determined of the scanned image, forwards the number formed by the addition of the received values to the address input of the image point store (BPS) and analyses the contents of the image point storage cells which have been called up in this way.

2. An arrangement as claimed in claim 1, characterised in that the recording device is a television camera (KA).

3. An arrangement as claimed in claim 2, characterised in that the raster sections are the television lines.

4. An arrangement as claimed in claim 2, characterised in that the raster sections are parts (RAS) of a television line.

5. An arrangement as claimed in claim 1 to 4, characterised in that the count of the image point counter (BPZ) is transferred into an image point store (BPS) every time a signal jump of the one or the other polarity takes place, that a length store (LZ) is provided which is released for the clock pulses each time a signal jump of the one polarity takes place and whose count is transferred into a length store (LS) each time a signal jump of the other polarity takes place.

6. An arrangement as claimed in claim 5, characterised in that for the determination of codes with code elements arranged in the raster device, the ratio and/or the difference of values contained in the length store (LS) and the difference of the values contained in the image point store (BPS) are formed for purposes of further analysis.

7. An arrangement as claimed in claim 6, characterised in that when a code is used comprising code elements whose front- and rear edges are spaced by the same intervals, the analysis device firstly forms the difference between the values contained in the image point store (BPS) and analyses the values contained in the associated cells of the length store (LS) only when the differences are equal.

8. An arrangement as claimed in claim 6 or 7, characterised in that a code signal formed from the contents of the length store (LS) and the image point store (BPS) is emitted only when identical signals have been established in a plurality of adjacent raster lines.

9. An arrangement as claimed in one of the claims 1 to 8, characterised in that the image point counter is connected at its output to an intermediate store into which the count of the image point counter is transferred following the occurrence of a signal jump, that a timer is provided which is set at a time which is greater than the duration of interference pulses but is shorter than the duration of useful pulses and which releases the output of the contents of the image point intermediate store to the image point store and the addition of clock pulses in the length counter only when the time set therein has expired without the occurrence of a new signal jump.

**Revendications**

1. Dispositif pour mémoriser et évaluer des images (OB) dans un dispositif de prise de vues (KA), qui explore l'image selon une trame et la convertit en signaux électriques (B), un compteur de points d'images (BPZ), auquel des impulsions à fréquence d'horloge constante sont envoyées et dont l'état est transféré, lors de l'apparition d'un saut du signal, dans une mémoire de points d'image (BPS), et un dispositif d'évaluation servant à évaluer les signaux mémorisés, remarquable par les caractéristiques suivantes:

a) il est prévu un compteur de sauts de signal (SPZ) qui, pendant l'exploration d'éléments de trame (RAS), effectue la somme du nombre des sauts de signal et dont l'état est enregistré, après chaque exploration d'un élément de trame, dans une ligne, associée à cet élément de trame, d'une mémoire de sauts de signal (SPS),

b) le dispositif d'évaluation reçoit les valeurs contenues dans la mémoire de sauts de signal (SPS), conformément à la séquence de mémorisation, additionne les valeurs reçues, et lorsque la valeur reçue se situe dans une zone de valeurs, qui est prédéterminée en rapport avec des caractéristiques connues de la structure devant être déterminée de l'image explorée, envoie le nombre formé par addition des valeurs reçues à l'entrée des adresses de la mémoire de points d'image (BSP) et évalue les contenus des cellules de mémoire de points d'image ainsi interrogées.

2. Dispositif suivant la revendication 1, caractérisé par le fait que le dispositif de prise de vues est une caméra de télévision (KA).

3. Dispositif suivant la revendication 2, caractérisé par le fait que les éléments de trame sont des lignes de télévision.

4. Dispositif suivant la revendication 2, caractérisé par le fait que les éléments de trame sont des parties (RAS) d'une ligne de télévision.

5. Dispositif suivant les revendications 1 à 4, caractérisé par le fait que l'état du compteur de points d'image (BPZ) est transféré, lors de chaque saut de signal s'effectuant avec l'un ou l'autre signe, dans la mémoire de points d'image (BPS), qu'il est prévu un compteur de longueurs (SZ), qui est autorisé pour les impulsions de cadence lors de chaque saut de signal s'effectuant avec un signe et dont l'état est transféré dans une mémoire de longueurs (LS) lors de chaque saut de signal s'effectuant avec l'autre signe.

6. Dispositif suivant la revendication 5, caractérisé par le fait que pour déterminer des codes avec des éléments de code présents dans le sens de la trame, on forme, en vue de la poursuite de l'évaluation, le rapport et/ou la différence de valeurs contenues dans la mémoire de longueurs (LS) et la différence des valeurs contenues dans la mémoire de points d'image (BPS).

. 7. Dispositif selon la revendication 6, caractérisé par le fait que dans le cas de l'utilisation d'un code comportant des mots de code dont les flancs avant ou arrière sont aux mêmes distances, le dispositif d'évaluation forme tout d'abord la différence des valeurs contenues dans la mémoire de points d'image (BPS) et évalue seulement ensuite les valeurs contenues dans les cellules associées de la mémoire de longueurs (LS), lorsque les différences sont égales.

8. Dispositif suivant la revendication 6 ou 7, caractérisé par le fait qu'un signal de code formé à partir des contenus de la mémoire de longueurs (LS) et du compteur de points d'image (BPS) n'est délivré que lorsqu'il est établi que des signaux coïncidents sont présents dans plusieurs lignes de trames voisines les unes des autres.

9. Dispositif suivant l'une des revendications 1 à 8, caractérisé par le fait qu'en aval du compteur de points d'image est branchée une mémoire intermédiaire dans laquelle se trouve transféré, après l'apparition d'un saut de signal, l'état du compteur de points d'image, qu'il est prévu une minuterie qui est réglée sur une durée supérieure à la durée des impulsions parasites, mais inférieure à la durée d'impulsions utiles et qui déclenche la délivrance du contenu de la mémoire intermédiaire de points d'image à la mémoire de points d'image ainsi que l'addition d'impulsions de cadence dans la mémoire de longueurs uniquement lorsque la durée, qui est réglée dans cette minuterie, s'est écoulée, sans qu'un nouveau saut de signal soit apparu.

FIG 1

FIG 2a

FIG 2b

FIG 3

FIG 4